# EUROPÄISCHE PATENTSCHRIFT

(11) **EP 1 427 565 B1**
(45) Veröffentlichungstag und Bekanntmachung des Hinweises auf die Patenterteilung: **14.09.2005**
(21) Anmeldenummer: 02796202.6
(22) Anmeldetag: 20.07.2002
(51) Int. Cl.: B23P 19/10, B23P 19/04, B60J 10/00

(54) **VORRICHTUNG ZUM ANBRINGEN VON DICHTUNGSPROFILEN AN FAHRZEUGTÜREN**
DEVICE FOR MOUNTING SEALING STRIPS ON VEHICLE DOORS
DISPOSITIF POUR POSER DES JOINTS D'ETANCHEITE PROFILES SUR DES PORTIERES DE VEHICULES

(30) Priorität: 30.08.2001 DE 10142131
(43) Veröffentlichungstag der Anmeldung: 16.06.2004
(73) Patentinhaber: Grohmann Engineering GmbH, 54595 Prüm (DE)
(72) Erfinder: THOMMES, Lothar, 54597 Matzerath (DE); KOHLEN, Bernhard, 54636 Ingendorf (DE); GROHMANN, Klaus, 54597 Hersdorf (DE)
(74) Vertreter: Kohlmann, Kai
(86) Internationale Anmeldenummer: PCT/EP2002/008117
(87) Internationale Veröffentlichungsnummer: WO 2003/018250

(56) Entgegenhaltungen:
- DE-A- 3 638 176
- DE-A- 19 837 508
- FR-A- 2 641 746
- FR-A- 2 781 404
- US-A- 4 653 166
- US-A- 5 121 532

## Beschreibung

Die Erfindung betrifft eine Vorrichtung zum Anbringen von Dichtungsprofilen an Klebeflächen von Fahrzeugteilen bestehend aus einem Basisgestell an dem mindestens eine Applikationsplatte befestigt ist, wobei jede Applikationsplatte mindestens ein im Bezug zum Basisgestell ortsfestes Plattensegment und mindestens ein bewegliches Plattensegment aufweist sowie Mittel zum Verändern der Position jedes beweglichen Plattensegmentes.

Eine solche Vorrichtung ist aus US-A-4,653,166 bekannt.

Derartige Vorrichtungen mit Applikationsplatten gehören zum Stand der Technik. Die zumeist paarweise angeordneten Applikationsplatten dienen der automatisierten Verklebung einer Türdichtung längs einer Beklebungsfläche an einer nicht ebenen Fahrzeugtür. Die Applikationsplatte ist zu diesem Zweck in mehrere obere bewegliche Segmente und ein unteres feststehendes Segment aufgeteilt, die über Scharniere miteinander verbunden sind. Die beweglichen Segmente befinden sich oberhalb der Fensterunterkante der Türe und ermöglichen eine Anpassung an die individuelle Form der mit einem Dichtungsprofil zu bestückenden Tür. Eine Vielzahl von Halterungen sind der Form des anzubringenden Dichtungsprofils folgend auf der Applikationsplatte angeordnet. Die Applikationsplatten sind regelmäßig vollständig in die Linie einer automatisierten Produktion integriert.

Probleme bei der automatisierten Produktion bestehen darin, dass sich durch herstellungsbedingte Toleranzen die Lage und Geometrie des oberen Bereichs der Türe im Bereich des Scheibenrahmens ändert. Diese durchaus mehrere mm betragenden Abweichungen, die erst in nachfolgenden Verarbeitungsstufen ausgeglichen werden, können zu Problemen bei der automatisierten Anbringung von Dichtungsprofilen an Fahrzeugtüren führen. Bisher hat man versucht, die Abweichungen durch einen erhöhten Andruck der an der Tür unter Zwischenlage des Dichtungsprofils anliegenden Applikationsplatte auszugleichen. Je nach Ausprägung der Abweichung führt diese Maßnahme jedoch nicht zum Erfolg, so dass das Dichtungsprofil nicht exakt an dem dafür vorgesehenen Klebebereich der Tür verklebt. Hieraus resultieren unerwünschte, den automatisierten Herstellungsprozess behindernde Nachbearbeitungsvorgänge.

Ferner ist aus der DE 198 37 508 A1 eine Montage-Vorrichtung bekannt, die einen zweiteiligen Montagerahmen aufweist, der in seiner Form der Fahrzeugtüre angepasst ist. In der Montagerahmen-Ebene sind die beiden nebeneinanderliegenden Teile senkrecht zu einer Trennlinie gegeneinander geringfügig verschiebbar. Der Abstand zwischen den Teilen wird vergrößert, um den Rahmen mit eingelegter schlauchförmiger Dichtung vereinfacht auf die Türe auflegen zu können.

Ausgehend von diesem Stand der Technik liegt der Erfindung die Aufgabe zu Grunde, eine Vorrichtung der eingangs erwähnten Art zu schaffen, die eine exakte Positionierung des zu verklebenden Dichtungsprofils zur Beklebungsfläche der Fahrzeugtür gewährleistet.

Die Lösung basiert auf dem Gedanken, mittels einer jedem beweglichen Plattensegment zugeordneten Lehre etwaige Toleranzen in der Lage des oberen Türbereichs zu dem unteren Türbereich zu erfassen und vor der Anbringung des Dichtungsprofils jedes bewegliche Segment abhängig von der erfassten Toleranz automatisch nachzustellen.

Diese Aufgabe wird bei einer Vorrichtung der eingangs erwähnten Art im einzelnen dadurch gelöst,
- dass jedem Plattensegment ein an dem Basisgestell in Aschsrichtung verschieblich gelagerter Referenzstößel zugeordnet ist, der sich von dem Basisgestell in Richtung des Plattensegmentes erstreckt und gegenüber dem Basisgestell arretierbar ist,
- dass der Referenzstößel an einer Stirnseite einen verstellbaren Nocken aufweist, der mit dem Fahrzeugteil in und außer Eingriff bringbar ist und
- im Abstand von dem Nocken ein Festanschlag an dem Referenzstößel befestigt ist, gegen den das zugeordnete Plattensegment bewegbar ist.

Bevorzugte Ausführungsformen sind in den abhängigen Ansprüchen angegeben. Die Nocken der Referenzstößel berühren in Eingriffstellung den oberen Türbereich an geeigneten Referenzstellen, die sich sowohl an der Innen- als auch an der Außenseite der Türkante befinden können. Die jeweilige Lage des Referenzstößels wird vorzugsweise durch eine pneumatisch betätigte Klemmvorrichtung arretiert.

Ein vorteilhaftes, jedoch nicht erfindungsgemäßes Betriebsverfahren der Vorrichtung für das Anbringen von Dichtungsprofilen ist durch folgende Merkmale gekennzeichnet:
- die gesamte Vorrichtung wird in einem Abstand D zwischen dem ortsfesten Plattensegment und dem Fahrzeugteil positioniert, wobei der Abstand D so gewählt wird, dass der Nocken des federbelasteten, nicht arretierten Referenzstößel jedes beweglichen Plattensegmentes an dem Fahrzeugteil zur Anlage kommt,
- anschließend wird jeder Referenzstößel gegenüber dem Basisgestell arretiert und jedes bewegliche Plattensegment gegen den Festanschlag des Referenzstößels bewegt und
- jeder an dem Fahrzeugteil anliegende Nocken wird außer Eingriff gebracht.

Dieses Betriebsverfahren der Vorrichtung gewährleistet, dass das feststehende Segment und sämtliche beweglichen Segmente der Applikationsplatte den gleichen Abstand zur Beklebungsfläche einnehmen. Die gesamte Vorrichtung wird dann in Richtung der Tür bewegt und das Dichtungsprofil kann positionsgenau appliziert werden. Hierzu wird die Vorrichtung zum Anbringen von Dichtungsprofilen soweit in Richtung des Fahrzeugteils verschoben, bis das Dichtungsprofil an der Klebefläche anliegt.

Nachfolgend wird die Erfindung anhand der Figuren näher erläutert. Es zeigen:
- **Figur 1**: eine schematische Schnittdarstellung der erfindungsgemäßen Vorrichtung.
- **Figur 2**: ein. Ausführungsbeispiel einer Applikationsplatte für den Einsatz in einer erfindungsgemäßen Vorrichtung mit mehreren beweglichen Segmenten in einer schematischen Seitenansicht und
- **Figur 3**: ein weiteres Ausführungsbeispiel einer Applikationsplatte für den Einsatz in einer erfindungsgemäßen Vorrichtung mit zwei beweglichen Segmenten in einer schematischen Schnittdarstellung.

Die Vorrichtung 1 zum Anbringen von Dichtungsprofilen an Klebeflächen an einer Fahrzeugtüre 6 besteht aus einem Basisgestell 2 an dem eine Applikationsplatte befestigt ist. Die Applikationsplatte weist ein im Bezug zum Basisgestell 2 ortsfestes Plattensegment 3 und ein daran über ein Gelenk 5 scharniertes bewegliches Plattensegment 4 auf, das der Form des oberen Türbereichs 7 entspricht. Eine Vielzahl von Halterungen 27 sind der Form des anzubringenden Dichtungsprofils 20 folgend auf der Applikationsplatte angeordnet. Zwischen dem Basisgestell 2 und dem beweglichen Plattensegment 4 befindet sich ein Druckmittelzylinder 8 zum Verschwenken des Plattensegmentes 4 um das Gelenk 5.

Am oberen Rand 9 des Basisgestells 2 ist eine Hülse 10, die einen dem Plattensegment 4 zugeordneten Referenzstößel 12 in Achsrichtung 11 führt, der sich senkrecht von der Oberfläche des Basisgestells 2 in Richtung des beweglichen Plattensegmentes 4 und der Tür 6 erstreckt. Der Referenzstößel 12 ist etwas nach außen versetzt auf die Kontur der Tür 6 ausgerichtet, so dass der Referenzstößel 12 die Anbringung des Dichtungsprofils 20 nicht behindert. Gegenüber dem Basisgestell 2 ist der Referenzstößel 12 mittels einer pneumatisch betätigten Klemmvorrichtung 13 arretierbar.

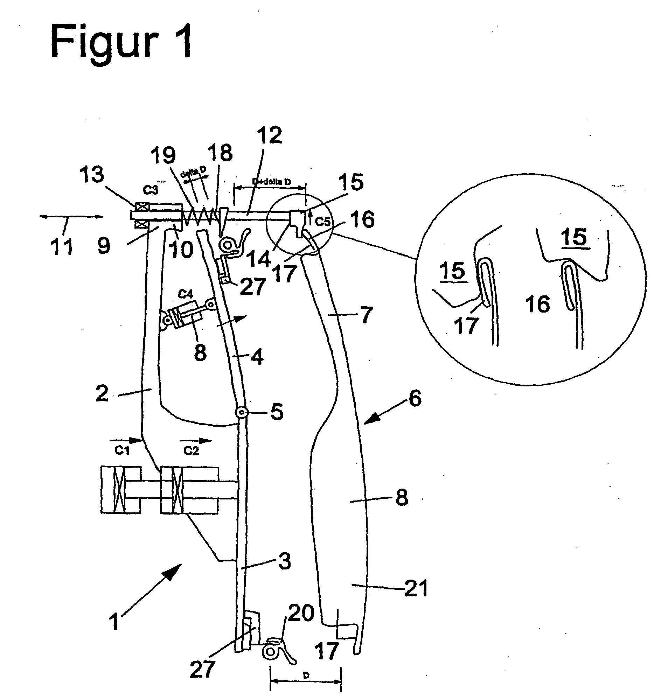

Der Referenzstößel 12 weist an einer Stirnseite 14 einen um die Achse 11 verdrehbaren Nocken 15 auf, der in der in der Figur 1 dargestellten Betriebsposition der Vorrichtung bereits mit dem oberen Türbereich 16 in Eingriff steht und durch Verdrehen außer Eingriff bringbar ist. In der Eingriffsposition kann der Nocken entweder von innen an der Klebefläche 17 für das Dichtungsprofil oder aber von außen an dem oberen Türbereich 16 anliegen.

Im Abstand von dem Nocken 15 ist ein Festanschlag 18 an dem Referenzstößel 12 befestigt, gegen den das zugeordnete Plattensegment 4 mittels des Zylinders 8 bewegbar ist. Der Abstand des Festanschlags 18 zu dem Nocken ist konstruktiv so festgelegt, dass bei Anlage des beweglichen Plattensegmentes 4 an den Festanschlag der Abstand des Klebebereichs 17 zu dem anzubringenden Dichtungsprofil im unteren und oberen Türbereich 7, 21 übereinstimmt. Zwischen dem Festanschlag 18 und der Hülse 10 befindet sich eine den Referenzstößel 12 umgebende Spiralfeder 19 gegen deren Federkraft der Referenzstößel 12 in Richtung des Basisgestells 2 bei gelöstem Klemmvorrichtung 13 verschieblich ist.

Die erfindungsgemäße Vorrichtung wird wie folgt betrieben, um im laufenden Herstellungsprozess eine optimale Anpassung der Applikationsplatte an die sich insbesondere im Bereich des Scheibenrahmens von Tür zu Tür geringfügig ändernde Geometrie zu erzielen:

Zunächst wird die gesamte Vorrichtung 1 in einem Abstand D zwischen dem ortsfesten Plattensegment 3 und der Fahrzeugtür 6 positioniert. Wird die Vorrichtung 1 um den Abstand D in Richtung der Fahrertür 6 bewegt, liegt das aufzuklebende Dichtungsprofil 20 auf dem Klebebereich17 im unteren Bereich 21 der Tür 6 auf. Der Abstand D muss außerdem so bestimmt werden, dass der Nocken 15 des Referenzstößel 12 entweder von innen an der Klebefläche 17 für das Dichtungsprofil 20 oder aber von außen an dem oberen Türbereich 16 zur Anlage gelangen kann.

Nach der Positionierung der Vorrichtung 1 in dem Abstand D wird der Referenzstößel 12 gegenüber dem Basisgestell 2 mittels des Klemmmechanismus 13 arretiert. Sodann wird das bewegliche Plattensegment 4 gegen den Festanschlag 18 des Referenzstößels 12 mittels des Zylinders 8 um den Weg Δ D bewegt und der an der Fahrzeugtür 6 anliegende Nocken 15 nach oben geschwenkt und damit außer Eingriff gebracht. Schließlich wird die Vorrichtung 1 zum Anbringen des Dichtungsprofils 20 um den Abstand D in Richtung der Fahrzeugtür 6 verschoben, so dass das Dichtungsprofil 20 sowohl im unteren als auch oberen Türbereich passgenau zur Anlage gelangt und dort verklebt wird.

Das vorstehend beschriebene Verfahren wird für jedes im Rahmen einer Serienfertigung an einer Tür zu befestigende Dichtungsprofil 20 wiederholt.

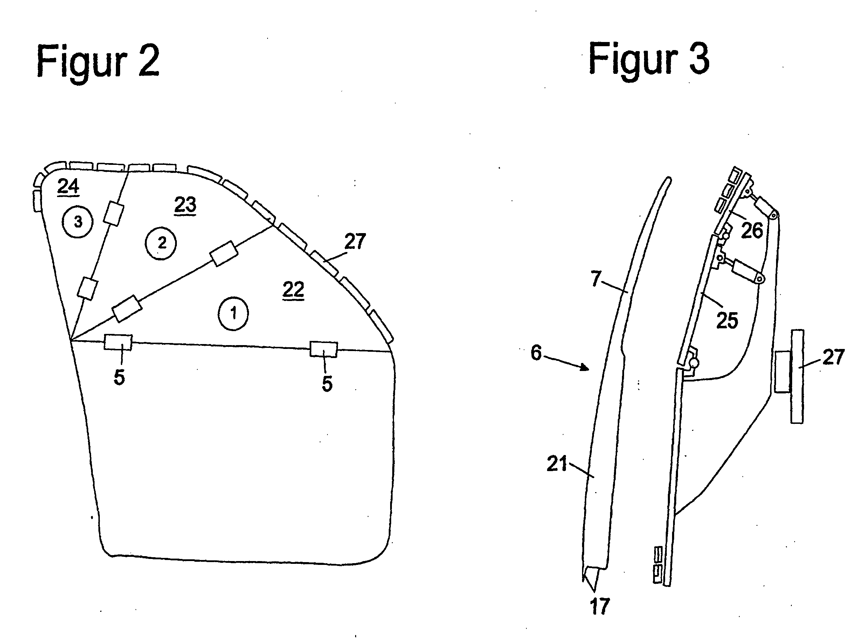

Selbstverständlich lässt sich das beschrieben Verfahren nicht nur mit Applikationsplatten mit nur einem beweglichen Segment 4 durchführen, sondern auch mit Applikationsplatten, die beispielsweise 3 beweglichen Segmente 22, 23, 24 im oberen Bereich 7 der Tür 6 aufweisen. Derartige Applikationsplatten sind insbesondere für stark eingezogene Türen erforderlich. Wie aus Figur 2 erkennbar ist lediglich das untere bewegliche Segment 22 unmittelbar gelenkig mit dem dem unteren Türbereich 21 zugeordneten feststehenden Segment 3 verbunden. Die beiden anderen beweglichen Segmente 23, 24 sind ausschließlich an dem jeweils benachbarten beweglichen Segment 22, 23 angelenkt.

Figur 3 zeigt ein weiteres Ausführungsbeispiel einer Applikationsplatte mit mehreren beweglichen Segmenten in Aufsicht. Sowohl in Figur 2 als auch Figur 3 wurden aus Gründen der Übersichtlichkeit die jedem beweglichen Plattensegment zugeordneten Referenzstößel 12 nicht dargestellt. Des weiteren zeigt Figur 3 eine sphärische Aufhängung 27, als Beispiel einer Halterung für die erfindungsgemäße Vorrichtung an einem beweglichen Arm.

## Patentansprüche

1. Vorrichtung (1) zum Anbringen von Dichtungsprofilen (20) an Klebeflächen von Fahrzeugteilen bestehend aus einem Basisgestell (2) an dem mindestens eine Applikationsplatte befestigt ist, wobei jede Applikationsplatte ein im Bezug zum Basisgestell (2) ortsfestes Plattensegment (3) und mindestens ein bewegliches Plattensegment (4, 22, 23, 24) sowie Mittel zum Verändern der Position jedes beweglichen Plattensegmentes aufweist, **dadurch gekennzeichnet,**
- **dass** jedem beweglichen Plattensegment (4, 22, 23, 24) ein an dem Basisgestell (2) in Achsrichtung verschieblich gelagerter Referenzstößel (12) zugeordnet ist, der sich von dem Basisgestell (2) in Richtung des beweglichen Plattensegmentes (4, 22, 23, 24) erstreckt und gegenüber dem Basisgestell (2) arretierbar ist,
- **dass** der Referenzstößel (12) an einer Stirnseite einen verstellbaren Nocken (15) aufweist, der mit dem Fahrzeugteil in und außer Eingriff bringbar ist und
- im Abstand von dem Nocken (15) ein Festanschlag (18) an dem Referenzstößel (12) befestigt ist, gegen den das zugeordnete Plattensegment (4, 22, 23, 24) bewegbar ist.

2. Vorrichtung (1) zum Anbringen von Dichtungsprofilen (20) nach Anspruch 1, **dadurch gekennzeichnet, dass** der Referenzstößel (12) gegenüber dem Basisgestell (2) mittels einer pneumatisch betätigten Klemmvorrichtung (13) arretierbar ist.

3. Vorrichtung (1) zum Anbringen von Dichtungsprofilen (20) nach Anspruch 1 oder 2, **dadurch gekennzeichnet,** das der Referenzstößel (12) gegen die Kraft einer Feder (19) in Richtung des Basisgestells (2) verschieblich gelagert ist.

4. Vorrichtung (1) nach einem der Ansprüche 1 bis 3, **dadurch gekennzeichnet, dass** sie in Richtung des Fahrzeugteils verschieblich angeordnet ist.

## Claims

1. A device (1) for the fitting of sealing gaskets (20) to adhesive surfaces of vehicle parts comprising a base frame (2), to which at least one application plate is fixed, whereby each application plate has a plate segment (3) stationary with respect to the base frame (2) and at least one mobile plate segment (4, 22, 23, 24) as well as means for changing the position of each mobile plate segment, **characterised in that**
- a reference push-rod (12) mounted displaceably in the axial direction on the base frame (2) is assigned to each mobile plate segment (4, 22, 23, 24), said reference push-rod extending from the base frame (2) in the direction of the mobile plate segment (4, 22, 23, 24) and being arrestable with respect to the base frame (2),
- the reference push-rod (12) has on an end face an adjustable cam (15), which can be brought into and out of engagement with the vehicle part and,
- at a distance from the cam (15), a fixed stop (18) is fixed to the reference push-rod (12), against which the assigned plate segment (4, 22, 23, 24) can be moved.

2. The device (1) for the fitting of sealing gaskets (20) according to claim 1, **characterised in that** the reference push-rod (12) is arrestable with respect to the base frame (2) by means of a pneumatically actuated clamping device (13).

3. The device (1) for the fitting of sealing gaskets (20) according to claim 1 or 2, **characterised in that** the reference push-rod (12) is mounted displaceably in the direction of the base frame (2) against the force of a spring (19).

4. The device (1) according to any one of claims 1 to 3, **characterised in that** it is arranged displaceably in the direction of the vehicle part.

## Revendications

1. Dispositif (1) de montage de profilés de joints d'étanchéité (20) sur des surfaces adhésives de parties de véhicules constitué d'un châssis de base (2) sur lequel au moins une plaque d'application est fixée, dans lequel chaque plaque d'application présente un segment de plaque fixe (3) par rapport au châssis de base (2) et au moins un segment de plaque mobile (4,22,23,24) ainsi qu'un moyen pour modifier la position de chaque segment de plaque mobile, **caractérisé en ce que**
- un poussoir de référence (12) positionné de manière à coulisser dans la direction axiale sur le châssis de base (2) est coordonné à chaque segment de plaque mobile (4,22,23,24), lequel poussoir s'étend à partir du châssis de base (2) dans la direction du segment de plaque mobile (4,22,23,24) et peut être arrêté contre le châssis de base (2),
- le poussoir de référence (12) présente sur un côté frontal une came (15) réglable, qui est mise en prise avec et se retire de la partie de véhicule et
- à distance de la came (15), une butée fixe (18) est fixée sur le poussoir de référence (12), contre laquelle le segment de plaque (4,22,23,24) coordonné peut être déplacé.

2. Dispositif (1) de montage de profilés de joints d'étanchéité (20) selon la revendication 1, **caractérisé en ce que** le poussoir de référence (12) peut être arrêté contre le châssis de base (2) au moyen d'un dispositif de serrage (13) actionné pneumatiquement.

3. Dispositif (1) de montage de profilés de joints d'étanchéité (20) selon la revendication 1 ou 2, **caractérisé en ce que** le poussoir de référence (12) est positionné de manière à coulisser par rapport à la tension d'un ressort (19) dans la direction du châssis de base (2).

4. Dispositif (1) selon une des revendications 1 à 3, **caractérisé en ce qu'**il est disposé de manière à coulisser dans la direction de la partie de véhicule.
